# EUROPEAN PATENT APPLICATION

(11) **EP 1 191 448 A1**
(43) Date of publication of application: **27.03.2002**
(21) Application number: 01906158.9
(22) Date of filing: 21.02.2001
(51) Int. Cl.: G06F 13/00, G06K 17/00, G06K 19/00, G06F 17/60

(54) **INFORMATION GATHERING SYSTEM**

(30) Priority: 22.02.2000 JP 2000044568
(71) Applicant: MATSUSHITA ELECTRIC INDUSTRIAL CO., LTD., Kadoma-shi, Osaka 571-0050 (JP)
(72) Inventor: SAKATA, Tsuyoshi, Yokohama-shi, Kanagawa 241-0816 (JP)
(74) Representative: Grünecker, Kinkeldey, Stockmair & Schwanhäusser Anwaltssozietät
(86) International application number: JP0101241
(87) International publication number: WO0163422

(57) **Abstract**

Providing information collection system that allows the user to access a network easily to obtain information.

In order to provide an information collection system for acquiring information from a network, said information collection system comprises pointer sending means (30) for sending the pointer to information to be acquired from a network based on a request, a portable terminal (20) having access means to a network and access means to pointer sending means, and information provision means (40) for providing information via a network, characterized in that said portable terminal acquires information from information provision means by using the pointer obtained after making a request of the pointer sending means. The user can easily access a network by using the pointer sending means as an entrance.

## Description

### Technical Field

The present invention relates to an information collection system that collects necessary information from a network, and in particular to an information collection system that has an easy access to a network.

### Background Art

In recent years, the internet has been in widespread use. It is possible to enjoy a variety of services such as purchasing articles and reserving travels tickets as well as acquiring information via this network.

Access to this network is possible from a PC as well as a word processor or a TV set equipped with an access feature. Recently, it is made possible to enter a URL as a home page address from a portable terminal such as a portable telephone set or PHS to access the internet via radio links.

Meanwhile, newspapers and magazines are carrying more and more advertisements having URLs to encourage people to access corresponding home pages. URLs abound in advertisements posted in a station yard and advertising posters hung in a train. Entering such URLs on a PC or a portable terminal allows detailed advertisement information to be acquired via the internet.

Acquisition of detailed information on advertisements is allowed also via an information collection system proposed in the Japanese Patent Laid-Open No. 65494/1999. In this system, an optical communication feature is provided for example on a binder to post an advertising poster hung in a train and an information control system is implemented to control the optical communications in cooperation with each binder. The user carries a portable information terminal equipped with an optical communications feature and sends via optical communications a request to acquire detailed advertisement information to abinder of an advertising poster hung in a train he/she is interested in. The binder, receiving this request, identifies the type of the advertisement to post and sends the location information of the binder and the identified type information to the information control system. The information control system reads the corresponding detailed advertisement information from information storage apparatus and returns the information to the binder, which sends the information to the portable information terminal via optical communications. The detailed advertisement information is displayed on the display screen of the portable information terminal to let the user know details of the advertisement he/she is interested in.

In the information collection system, however, it is necessary to implement a new information control system and to provide features as an entrance to the information control system, that is, a network connection feature, advertisement type read means and portable terminal communications means such as optical communications means on each of the binders of advertising posters hung in a train. It is also necessary to deploy the binders in various locations. This requires a huge amount of initial investment on advertisement locations, thus causing a large number of challenges until such a system is implemented and put to widespread use.

On the other hand, information collection using the internet is based on an existing system so that it is possible to enjoy a variety of services once the user has accessed the network. However, in order to access the network, an operation such as to enter an URL on a terminal apparatus is required. This cumbersome work at the entrance to the network stands as a big barrier against use of the network to elderly people and those who are not accustomed to information apparatus.

Further, even those who are accustomed to information apparatus would seldom take a note of the URL in the advertisement posted in a station yard or an advertising poster hung in a train to enter the URL later on an information terminal in order to acquire detailed advertisement information. This compromises the effects of advertisements.

The invention solves such problems associated with the related art and aims at providing an information collection system that provides an easy access to a network for acquisition of information thus enhancing the effects of advertisements.

### Disclosure of the Invention

The invention provides an information collection system for acquiring information from a network comprising pointer sending means for sending the pointer to information to be acquired from a network based on a request, a portable terminal having access means to a network and access means to pointer sending means, and information provision means for providing information via a network, characterized in that said portable terminal acquires information from information provision means by using the pointer obtained after making a request of the pointer sending means.

The pointer sending means is added to an advertisement medium so that the portable terminal may use the pointer obtained from the pointer sending means to acquire advertisement information from an advertisement server.

The pointer sending means is composed of a non-contact IC card such as an RFID.

Thus, it is possible to easily access a network by using the pointer sending means as an entrance. This assures an organic linkage between the cyber world and the real world.

By adding the pointer sending means to an advertisement medium, it is possible to enhance the effects of an advertisement. For example, it is possible to entice the user to electronic commerce services or objectively evaluate the advertisement effects by counting the number of accesses to a particular advertisement.

### Brief Description of the Drawings

Fig. 1 is a block diagram showing a configuration of an information collection system of the first embodiment of the invention.
Fig. 2 is a block diagram showing the first example of using network services according to an information collection system of the first embodiment of the invention.
Fig. 3 is a block diagram showing the second example of using network services according to an information collection system of the first embodiment of the invention.
Fig. 4 is a block diagram showing the third example of using network services according to an information collection system of the first embodiment of the invention.
Fig. 5 is a block diagram showing the fourth example of using network services according to an information collection system of the first embodiment of the invention.
Fig. 6 is a block diagram showing a configuration of an information collection system of the second embodiment of the invention.
Fig. 7 explains an advertisement business that is based on the fee contingent on success using an information collection system of the second embodiment of the invention.
Fig. 8 is a block diagram showing another configuration of an information collection system of the second embodiment of the invention.
Fig. 9 is a block diagram showing a configuration of an information collection system of the third embodiment of the invention.
Fig. 10 shows the structure of data stored in the memory of RFID of each embodiment.
Fig. 11 shows the structure of data stored in the memory of a history collection terminal of the second embodiment.
Fig. 12 shows the structure of data stored in the memory of an advertisement server of the third embodiment.
Fig. 13 is a block diagram showing the configuration of the RFID.

In the figures, a numeral 11 represents a resonance circuit, 12 a power source generator, 13 a demodulator, 14 a modulator, 15 a memory controller, 16 a memory, 20 a personal portable terminal, 21 advertisements information request means, 22 communications means, 23 advertisements information acquisition means, 24 information display means, 25 non-contact power feedmeans, 30 RFID, 31 advertisements information sending means, 32 a memory, 33 a pointer storage area, 34 a history storage area, 35 history retention means, 36 history sending means, 37 non-contact power reception means, 38 a location information storage area, 39 history encryption means, 40 an advertisements server, 41 advertisements information provision apparatus, 42 history retention means, 43 a database section, 44 a history storage area, 50 a history collection terminal, 51 history request means, 52 non-contact power feed means, 53 location information acquisition means, 54 a history management section, 55 a memory, and 56 a history storage area.

### Best Mode for Carrying Out the Invention

Embodiments of the invention will be detailed below with reference to attached drawings.

### <<First embodiment>>

In an information collection system according to the first embodiment of the invention, a non-contact IC card called RFID is used at the entrance of a network.

The RFID comprises a coil for antenna and an IC chip and originates information using as a power source the energy of a radio wave coming from a question machine (reader-writer). Thus, bidirectional communications are allowed without using batteries. The communications range is some 70 centimeters. At the present time, the RFID can be manufactured at a low cost of 50 yen per unit.

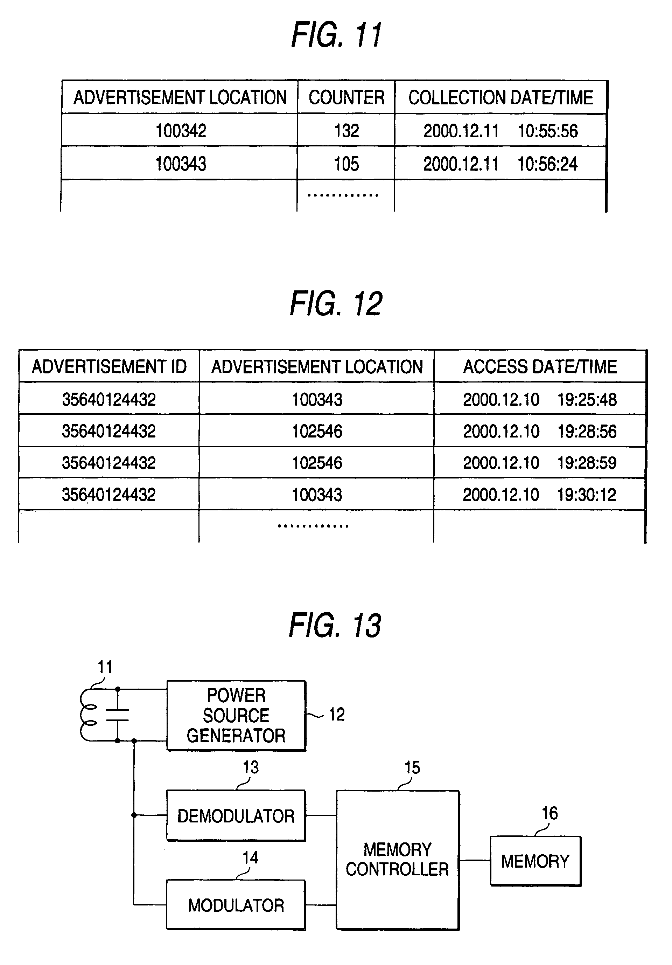

Fig. 13 shows a block diagram of RFID. The RFID comprises a resonance circuit 11 composed of a coil of an antenna and a capacitor, a power source generator 12 for supplying as a power source a signal obtained by the resonance circuit 11 to each section, a demodulator 13 and a modulator 14 connecting to the resonance circuit 11, a memory 16 and a memory controller 15. The memory controller 15 reads/writes information from/to the memory 16. The demodulator 13 receives data and demodulates the data. The modulator 14 modulates the data read by the memory controller 15 and sends the resulting data.

The RFID can be formed on a label, which can be affixed to a target article. In case the target article is made of paper such as printed advertisements and magazines, the antenna section can be directly printed on the paper and only an IC chip can be affixed to the paper.

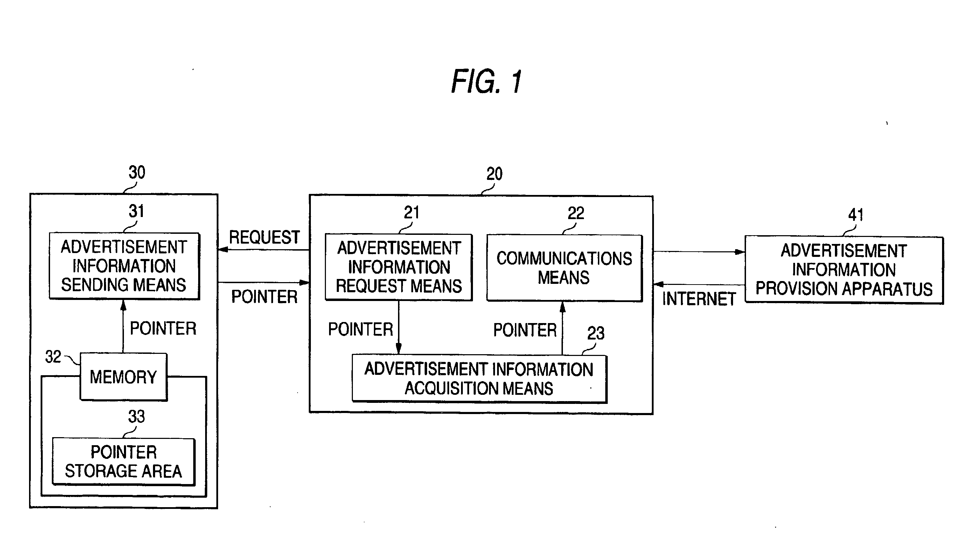

As shown in Fig. 1, an information collection system of the first embodiment comprises an RFID 30 affixed to for example an advertisement posted in a station yard, a personal portable terminal 20 equipped with a feature to communicate with the RFID and a feature to access the internet, and advertisement information provision apparatus 41 for providing detailed advertisement information via the internet.

The RFID 30 comprises a memory 32 having a pointer storage area 33 where the pointer to detailed advertisement information is stored and advertisement information sending means 31 for sending the pointer in response to a request by the personal portable terminal 20.

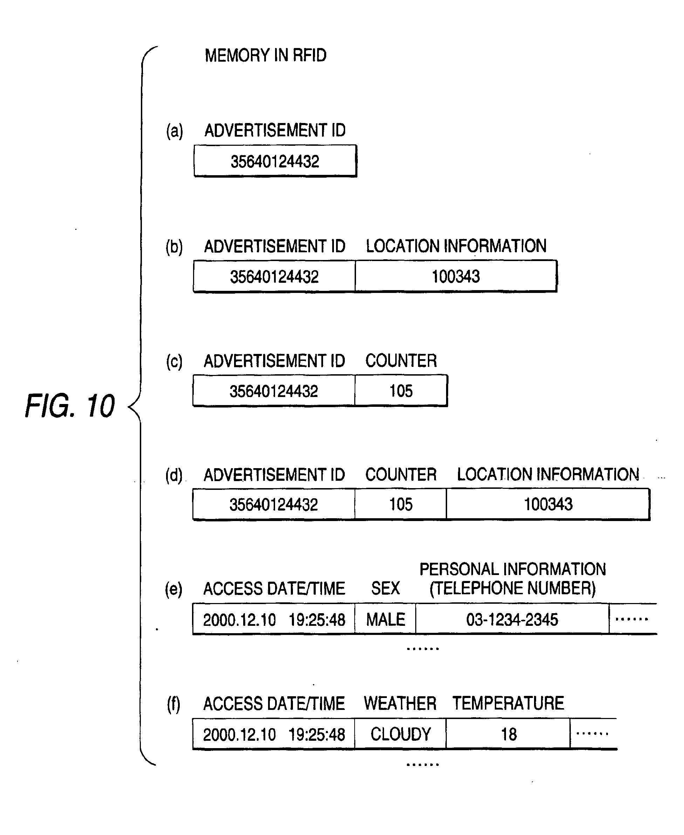

The personal portable terminal 20 is composed by attaching a communications card for communicating with the RFID on a portable telephone set equipped with an access feature to the internet. The personal portable terminal 20 comprises as functional blocks advertisement information request means 21 for obtaining a pointer via communications with the RFID, advertisement information acquisition means 23 for acquiring detailed advertisement information from the advertisement information provision apparatus 41 based on the obtainedpointer, and communications means 22 for accessing the advertisement information provision apparatus 41 via the network. The advertisement information acquisition means 23 comprises a memory (not shown) for storing the obtained pointer and information obtained from the network. In the memory 32 of the RFID 30 is stored an advertisement ID as a pointer, as shown in Fig. 10(a). The advertisement ID is a URL indicating for example the address of the advertisement information provision apparatus 41. Data write to the advertisement ID of the memory 32 of the RFID 30 is made as batch processing by sending the write information from the reader-writer to a bundle of printed advertisements of the same contents where the RFIDs 30 are affixed.

In case the user of the information collection system is interested in an advertisement posted in the station yard, approaches the advertisement up to 70 centimeters to the advertisement and clicks the corresponding button of the personal portable terminal 20. In response to this operation, the RFID 30 sends a pointer stored in the memory 32 from the advertisement information sending means 31 to the personal portable terminal 20.

The advertisement information acquisition means of the personal portable terminal 20 sends the obtained pointer to the communications means 22 via the advertisement information request means 21. The communications means accesses the advertisement information provision apparatus 41 via the network based on the pointer.

By retaining the pointer obtained from the RFID 30 in the advertisement information acquisition means of the personal portable terminal 20, it is possible to access the advertisement information provision apparatus 41 asynchronously with the obtaining of the pointer from the RFID 30.

Thus, according to the information collection system, it is possible to use the RFID as an entrance to the network, allowing connection to the network without cumbersome work of entering a URL. Once the user is on the network, the user can easily jump to a link destination thus enjoying services provided by the network.

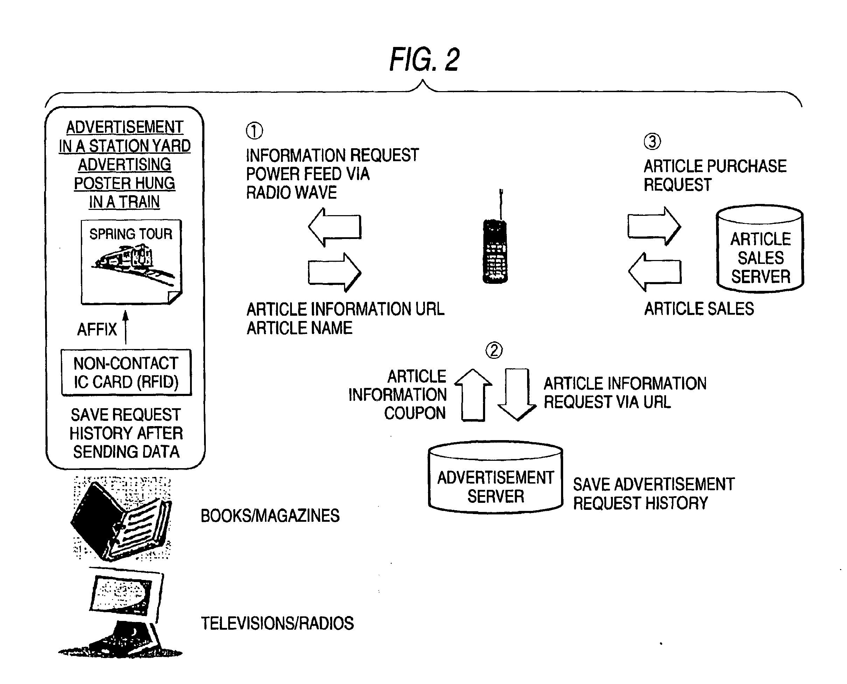

As shown in Fig. 2, for example, the user is interested in an advertising poster and clicks the button of the portable terminal (①), accesses the advertisement server based on the URL obtained from the advertising poster to obtain and display advertisement information (②), accesses an article sales server (③), and makes reservations for a travel or purchase an article on the spot.

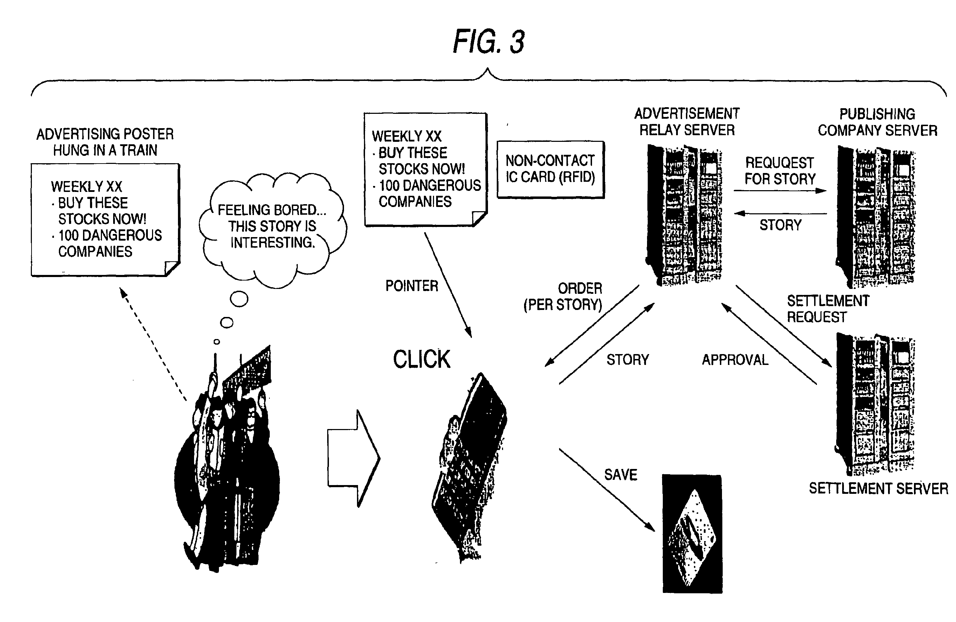

As shown in Fig. 3, in case an advertising poster hung in a train carries a story that attracts the user, the user clicks the button of the portable terminal to obtain the pointers to the stories, selects the pointer of the target story and orders delivery of the story via the network.

This order is relayed by an advertisement relay server. The story is sent from a publishing company to the advertisement relay server and approval or settlement is made by a settlement server. In case the settlement is approved, the advertisement relay server sends the story to the portable terminal and the user can display the story on the display screen of the portable terminal and save the story on a recording medium.

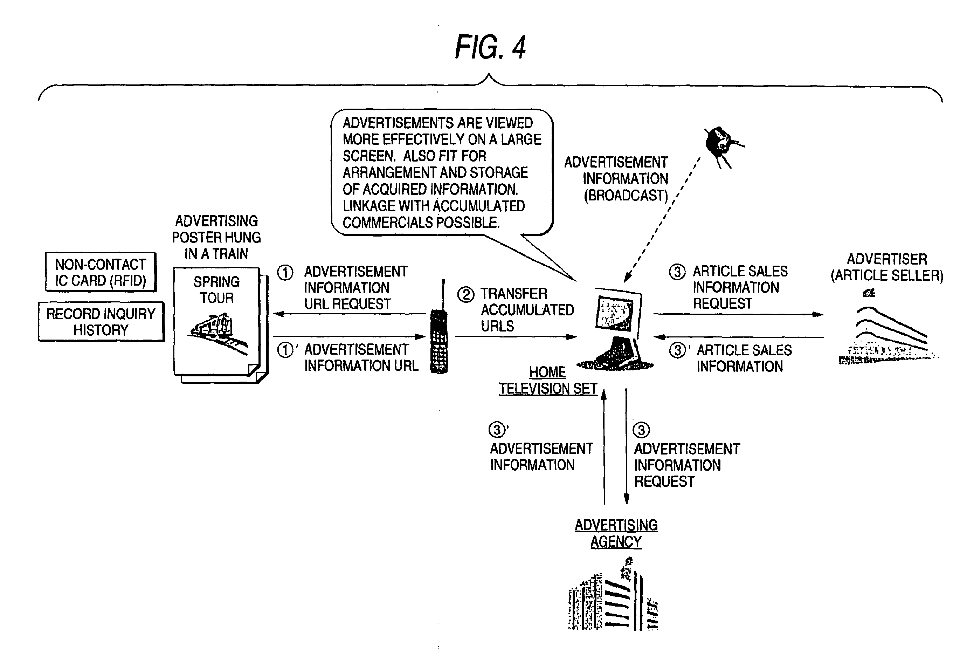

As shown in Fig. 4, the user obtains an URL from the advertising poster, accumulates the URL and transfers the URL to a home television set. The user accesses an advertising agency from the television set to obtain advertisement information or accesses an article seller that links to the advertisement information to purchase an article. In this case, the user can display advertisement information on the large screen of the television set as well as provide a linkage to the broadcast advertisement information.

In the application of the television set, a method is under examination where broadcast commercials are accumulated and only commercials selected among those commercials based on the user' s profile (user's taste information) are displayed. This approach may lead to a situation where what the user likes the bets cannot be obtained depending on the accuracy of the user's profile or a large number of commercials have made great hits thus preventing reasonable selection.

According to the method of the invention, the user provides a linkage to advertisement information (pointer ( obtained from the real world to obtain desired information.

By appending an RFID to a magazine, it is possible to obtain stories and advertisement information carried on a magazine. The method for obtaining information in this case may be diversified. Amethod to correspond to the restriction on memory of the RFID, that is, an inexpensive embodiment would be a method described below.

The RFID does not register all the pointers to all the stories or advertisement information but register a single pointer to the information in the entire magazine. The portable terminal obtains this pointer to the entire magazine and accesses the network and displays the information in the entire magazine. Entering the number of the page carrying a desired story or advertisement in the page number input column in the information causes the portable terminal to access an advertisement server again. This sends detailed information on the desired story of advertisement to the portable terminal.

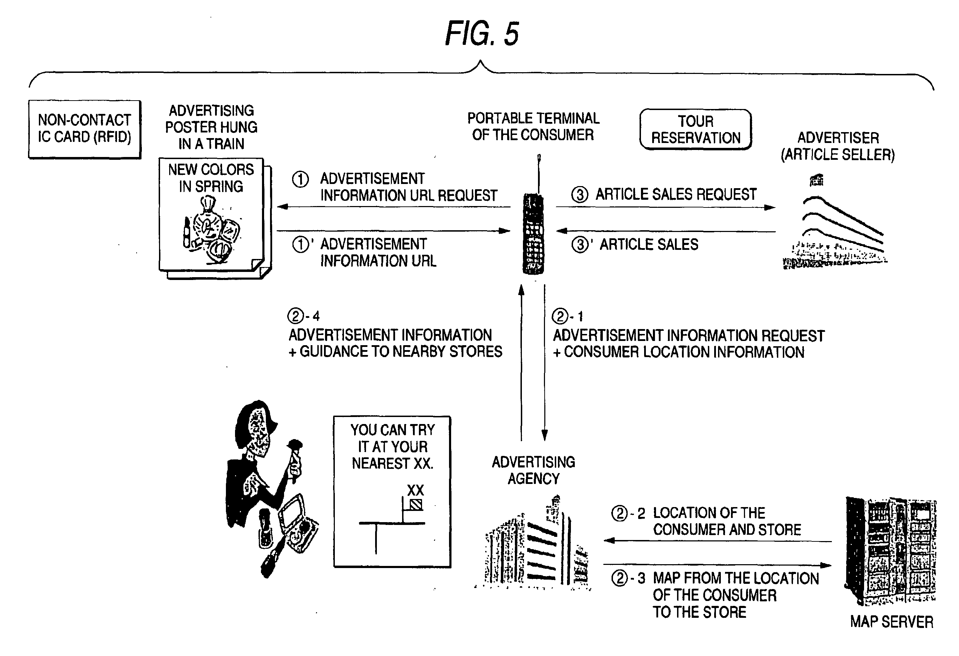

As shown in Fig. 5, when the user uses the portable terminal to obtain and URL from the advertising poster, the portable terminal sends the current location information obtained via the location search feature of the portable terminal, together with the URL, to the advertising agency. The advertising agency obtains the map information covering the area from the user to the store closest to the user location from a map server, and sends the map information guiding the nearby store as well as advertisement information to the portable terminal.

In this way, once the user is on the network, the user can enjoy various services provided by the network.

In case a plurality of advertisements are posted side by side, clicking on the portable terminal may cause a pointer to be sent from the RFID of the plurality of advertisements. In order to avoid this, the portable terminal is provided with listing means for listing information received from an RFID and selection means for selecting a pointer from this list. By doing so, the user checks pointers and enables the target pointer alone.

In this case, recording the title information such as article names as well as pointers on the RFID so that the pointers and article names may be listed on the listing means facilitates the user's selection on the selection means.

A configuration where an RFID receiving an information request communicates the field strength of the request coming from a portable terminal with surrounding RFIDs and the RFID with the highest field strength alone sends pointers or a plurality of RFIDs with the highest field strengths alone send pointers reduces the user's effort of selection.

The listing means can be used also in case pointers are obtained from a plurality of RFIDs within a predetermined time and one of the pointers are selected later to access the network.

While the foregoing example assumes that power is fed to the RFID over radio waves from the portable terminal, power feed means may be provided separately for constantly sending radio waves for power source. In this case, it is possible to reduce sending power of the portable terminal to the RFID and thus downsizing the portable terminal.

The advertisement may contain not only printed advertisements but also panorama visions to display moving pictures outdoors. In such a case, the panorama vision is provided with sending means for sending a pointer to the panorama vision in the RFID communications format and the sending means selects a pointer to be sent in accordance with the contents of an advertisement on the panorama vision display.

While advertisements are explained in this example, it is possible to affix an RFID to a thing other than an advertisement and use the RFID as the entrance to a network. For example, in case home electric appliance is given an RFID to memorize the URL of the service center or serial number of the electric appliance, the user simply clicks on his/her portable terminal when the electric appliance goes faulty to cause information such as the URL of the service center in charge of repairs or serial number to be sent to the portable terminal thus causing information such as the serial number to be sent from the portable terminal to the service center via the network.

In this way, according to this embodiment, it is possible to implement an information collection system that allows anyone to enjoy the network convenience by providing entrances to the network by using RFIDs. For example, even today when interfaces of digital apparatus such as PCs are in widespread use, elderly people have difficulty in operating PCs. This presents a problem of difficulty of the access to a cyber world itself. Or, even when the user has an access (via PC operation) to a cyber world without troubles but the user may have difficulty in searching for a desired home page because selection of a keyword is inappropriate. This relates to a problem with how to reach an entrance to desired information (such as URL of a home page).

Even in such a case, according to the invention, it is possible to provide an organic linkage between a cyber world and a real world, because the user can find a clue to obtain the URL of the detailed advertisement information from an advertisement that exists around us (real world). This has proven effective and promises enhancement of the convenience in the cyber world.

By providing an RFID on an advertisement, the user is more closely connected to the advertisement provider. The user can obtain detailed information as soon as he/she is interested in an advertisement. The advertisement provider can attract more and more users to their advertisements and enhance the effects of advertisements. The advertisement provider can directly entice the user to an electronic commerce service thereby leading to an actual business scene.

The portable terminal can directly access to a network as well as pass a pointer obtained from an RFID to a PC for access from the PC to the network.

### <<Second embodiment>>

The second embodiment is an information collection system where the number of accesses to an RFID (history information) is additionally stored in the memory of the RFID to be added to an advertisement in order to enhance the capability of the advertisement.

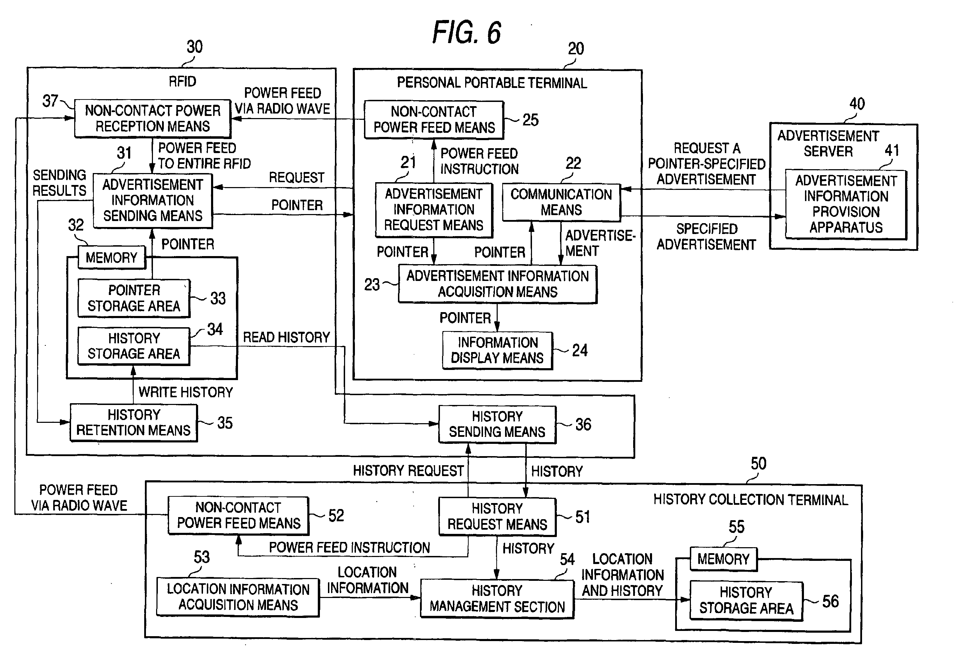

The system, as shown in Fig. 6, comprises an advertisement where an RFID 30 for accumulating pointers and history information is added, a personal portable terminal 20 equipped with a feature to communicate with the RFID and a feature to communicate with a network, an advertisement server 41 equipped with advertisement information provision apparatus 41, and a history collection terminal 50 for collecting history information from the RFID 30.

The RFID 30 comprises a memory 32 having a pointer storage area 33 and advertisement information sending means 31 for sending a pointer to the personal portable terminal 20, non-contact power reception means 37 for receiving power via a radio wave and feeding power to the entire RFID, history sending means 35 for counting the number of pointer transmissions of advertisement information sending means 31, and history sending means 36 for sending history information recorded in a history storage area 34.

The personal portable terminal 20 comprises advertisement information request means 21 for obtaining a pointer from the RFID 30, advertisement information acquisition means 23 for acquiring advertisement information based on the obtained pointer, means 22 of communications to the network, information display means 24 for displaying the obtained advertisement information, and non-contact power feed means 25 for sending a power feed radio wave to the RFID 30. The advertisement information acquisition means 23 comprises a memory (not shown) for storing information obtained from the pointer obtained and the network.

The history collection terminal 50 comprises non-contact power feed means 52 for sending a power feed radio wave to the RFID 30, history request means 51 for requesting the RFID 30 to send history, location information acquisition means 53 for acquiring the information on the location where the advertisement is posted, a history management section 54 for managing a pair consisting of location information and history information on each advertisement, and a memory 55 having a history storage area 56 for storing the management information of the history management section 54.

In the memory 32 of the RFID 30 are stored an advertisement ID and a count value indicating the number of accesses to the RFID, as shown in Fig. 10(c).

In this system, in case the personal portable terminal 20 requests a pointer from the RFID 30, the advertisement information request means 21 instructs the non-contact power feed means 25 to feed power to the RFID 30 and the non-contact power feed means 25 sends a power feed radio wave to the RFID 30. The non-contact power reception means 37 of the RFID 30 rectifies the energy of the radio wave and uses this as a power source to feed power to the entire RFID. When the RFID 30 is activated, the advertisement information request means 21 of the personal portable terminal 20 requests a pointer from the RFID 30. The advertisement information sending means 31 of the RFID 30 reads the pointer stored in the pointer storage area 33 of the memory 32 and sends it to the personal portable terminal 20 while sending the transmission result to the history retention means 35. The history retention means 35 counts the number of pointer transmissions and writes the count value into the history storage area of the memory 32.

In the personal portable terminal 20, the advertisement information request means 21 notifies the advertisement information acquisition means 23 of the obtained pointer. The advertisement information acquisition means 23 passes the pointer to the communications means 22 to instruct communications. The communications means 22 accesses the advertisement information provision apparatus 41 of the advertisement server 40 to request an advertisement specified with the pointer. The advertisement information provision apparatus 41 sends the specified advertisement to the personal portable terminal 20. The advertisement information acquisition means 23, acquiring this advertisement via the communications means 22, displays the advertisement on the information display means 24.

Via such an operation sequence, the access count is accumulated as history information in the memory 32 of the RFID 30.

The history collection terminal is a reader of the RFID 30. When an advertisement whose posting period has elapsed is to be removed, the person in charge uses the history collection terminal 50 to read history information stored in the RFID 30. In this practice, the person in charge enters data representing the posting location of the advertisement as location information.

In case history information is read from the RFID 30, the history request means 51 of the history collection terminal 50 instructs the non-contact power feed means 52 to feed power to the RFID 30. The non-contact power feed means 52 sends a power feed radio wave to the RFID 30. The non-contact power reception means 37 of the RFID 30 rectifies the energy of the radio wave and uses this as a power source to feed power to the entire RFID. When the RFID 30 is activated, the history request means 51 requests history information from the RFID 30. The history sending means 36 of the RFID 30, in response to this request, reads history information from the history storage area 34 of the memory 32 and sends the history information to the history collection terminal 50.

The history request means 51 of the history collection terminal 50 passes the received history information to the history management section 54. The history management section 54 associates the history information with the location information on the advertisement input from the location information acquisition means 53 and stores the set of information together with the data on the collection date in the history storage area 56 of the memory 55.

Fig. 11 shows information stored in the memory 55 of the history collection terminal 50. The identification name of the location where the advertisement medium is posted may be entered, such as "Billboard A-1, north entrance, Shimokitazawa Station" as information on the location of an advertisement. For an advertising poster hung in a train, it is possible to identify the advertisement location such as "Train-hung advertising poster 9-A, car 6, train number 135426, Yamanote Line." Such location information is entered by the person in charge of collection with hands or an IC card from the location information acquisition means 53 of the history collection terminal 50. The history collection terminal 50 maybe provided with a GPS location information acquisition feature and the latitude and longitude of the location where the advertisement is posted may be entered.

The information collected by the history collection terminal may be used as a measurement value to indicate the results of each ad. For example, it is understood that the posting method needs improvement such as increasing the lighting level or putting up the advertisement forward in a posting location with lower measurement value.

It is possible to introduce, considering the measurement value, an advertisement system that is based on the fee contingent on success where the advertiser pays the advertisement rate according to the actual results.

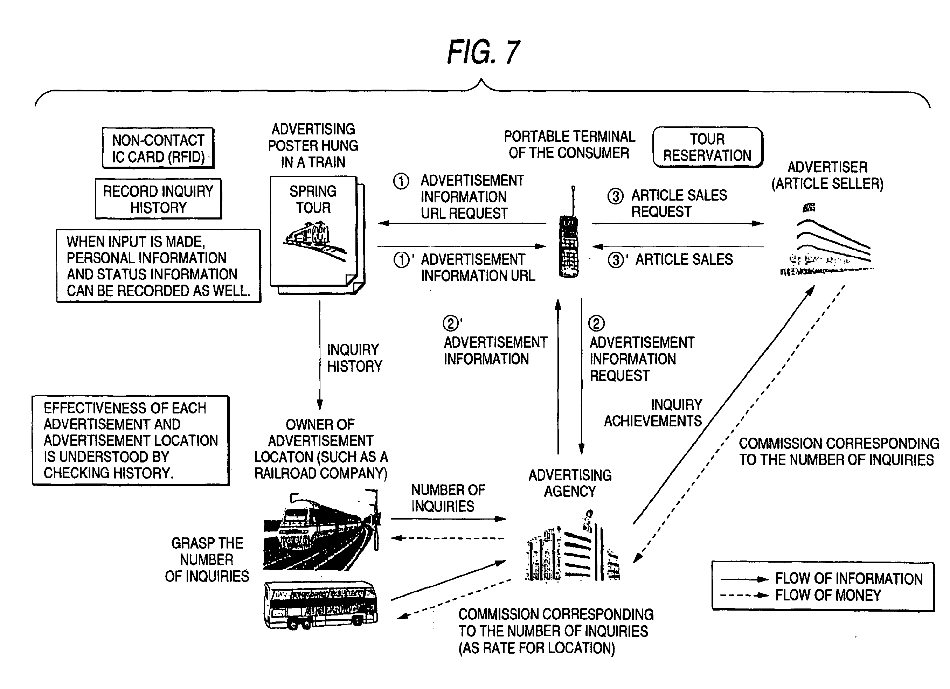

Fig. 7 shows the advertisement system that is based on the fee contingent on success. For example, concerning an advertising poster hung in a train, charging and payment are made based on the number of inquiries measured via the history collection terminal between a railroad company or bus company (advertisement location provider), an advertisement installer, an advertising agency and an advertiser.

In this system, the advertisement medium that received an advertisement information request from a portable terminal sends an advertisement information pointer then records the sending results as history information. The history information may comprise personal information of the requester sent over the request by the portable terminal and information on the situation at the request (time, weather, line density) as well as the number of transmissions.

The advertisement installer uses the history collected from the advertisement medium to request an advertisement installation rate from the advertising agency. The advertisement installation rate is charged in proportion to the access count or based on a stepwise increase of predetermined access count. The advertising agency requests an advertisement planning rate corresponding to the access count from the advertiser. The advertisement location provider or advertisement installer may request a reward corresponding to the access count directly from the advertiser.

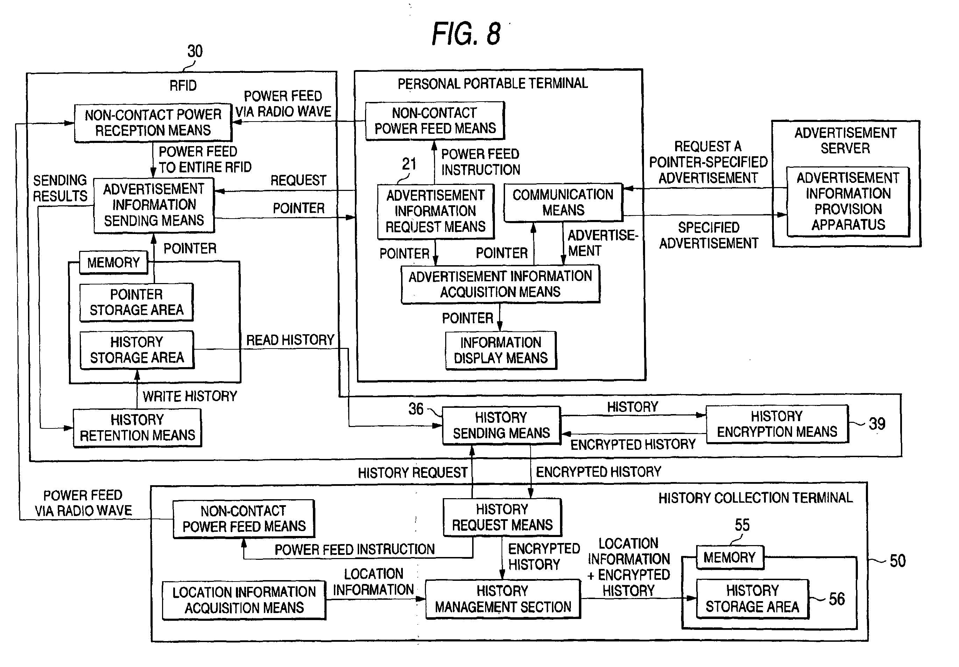

Fig. 8 shows a configuration where history information sent from the RFID is encrypted in order to prevent falsification of the history information . In this system, for example, the advertisement location provider, the advertising agency and the advertiser have separate encryption keys. The RFID 30 comprises history encryption means 39 for encrypting history information with these encryption keys. The history encryption means 39, receiving history information from the history sending means 36, encrypts the history information with the retained three types of encryption keys. The history sending means 36 sends the encrypted history information to the history collection terminal 50. Thus, the location information and encrypted history information are stored in the history storage area 56 of the history collection terminal 50.

The history information collected by the history collection terminal 50 is separately accessible to each of the advertisement location provider, advertising location provider and advertiser by using respective keys retained to decode the information. This upgrades the reliability of the history information.

The history encryption means 39 may not need to retain the encryption keys on a regular basis provided the history collection terminal 50 gives the encryption keys to the RFID 30 on request of history information. This prevents an encryption key from being deciphered during the as posting period thus enhancing safety.

The encryption approach may use a public key. When history information is sent from the RFID 30 to the history collection terminal 50, information specific to each advertisement or information that dynamically changes (for example the time and location of an advertisement) is integrated with the history information. The integrated information or the digest thereof is encrypted using a public key and sent to the history collection terminal 50 with digital signature affixed. The encrypted information is sent to necessary locations as is and the receiver uses a secret key to check whether the entire information can be decoded or decode the signature to check whether the digest is identical in order to assure that the information is not falsified.

In case a plurality of traders are involved in the advertisement business that is based on the fee contingent on success, as many copies of the history as the number of traders are encrypted with respective public keys (or given digital signatures) . The history encrypted in separate ways using those plural keys is collected by the history collection terminal 50. The history collection terminal distributes the history to the traders and pays reward corresponding to the results to the traders. In this way, it is possible to introduce an advertisement business that is based on the fee contingent on success whose fairness can be verified into printed advertisement applications.

Thus, collecting the history information of the RFID via the history collection terminal allows objective evaluation of the value of an advertisement. It is possible to improve the advertisement presentation method or introduce an advertisement system that is based on the fee contingent on success.

While counting and accumulation of history information are made in the RFID 30, the counter and accumulation means may be provided outside the RFID 30 for accumulation of history information. By doing so, it is possible to simplify the configuration of the RFID 30 thus suppressing an increase in the cost of the RFID.

For an advertising poster hung in a train, history per advertisement (access count) as well as the access count of each advertisement may be totaled and saved per train. A configuration where the counter and accumulation means is provided outside the RFID 30 allows such totaling. In this way, by saving the access count for each of a plurality of advertisement media constituting a group and the access count totaled per group, the value of the advertisement is known based on the access count per advertisement medium. The value of the advertisement posting location is known by comparing the value of the advertisement with that of a similar advertisement. Also, the value of the advertisement posting district is understood from the total value per group.

### <<Third embodiment>>

The third embodiment is an information collection system where the location information on RFID is stored in the memory to be affixed to an advertisement and history information of the advertisement is collected via an advertisement server.

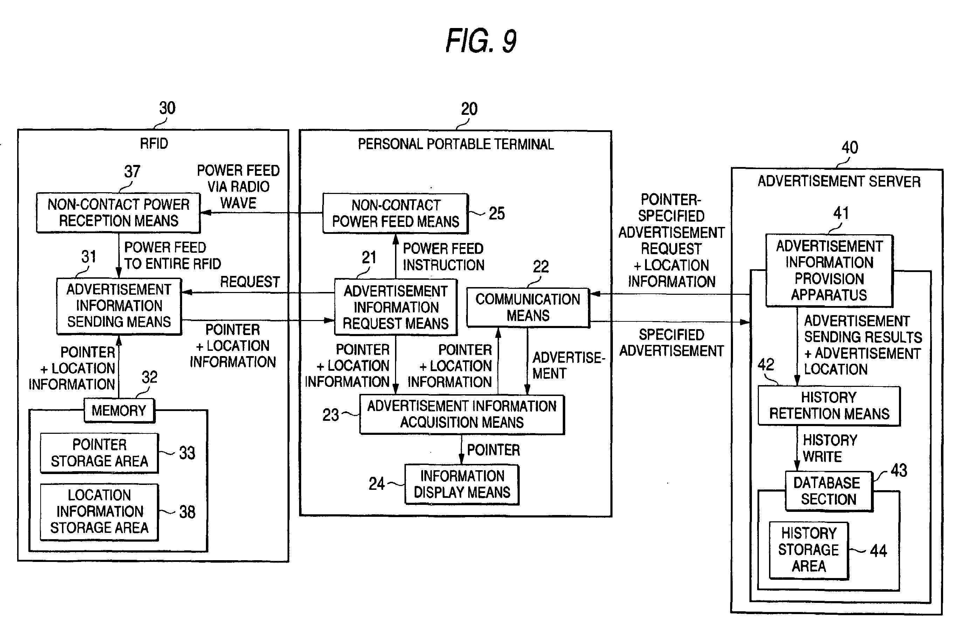

In this system, as shown in Fig. 9, an RFID 30 comprises non-contact power receptionmeans 37, advertisement information sending means 31, and a memory 32 having a pointer storage area 33 and a location information storage area 38. Advertisement information provision apparatus 41 of an advertisement server 40 comprises history retention means 42 for generating history information and a database section 43 having a history storage area 44. A history collection terminal is not provided. The configuration of a personal portable terminal 20 is the same as that in the second embodiment (Fig. 6).

In the memory 32 of the RFID 30 are stored an advertisement ID and location information on RFID, as shown in Fig. 10(b). When location information is written into the memory 32, the location information on a posting location of a printed advertisement (for example Billboard A-1, north entrance, Shimokitazawa Station) or location information indicating the distribution range (for example the location information indicating the Keio Line for an advertisement to be posted in the Keio Line trains) is written via location information write means when an printed advertisement with RFID 30 affixed is posted or distributed.

In this system, when the personal portable terminal requests a pointer from the RFID 30, the RFID 30 sends the pointer as well as location information stored in the memory 32 to the personal portable terminal 20. The personal portable terminal 20 sends the pointer and the location information when it requests as information from the advertisement server 40 and acquires advertisement information specified by the pointer from the advertisement server 40.

The history retention means 42 of the advertisement server 40 stores the advertisement ID, location information and access date into the history storage area 44 of the database section 43. Fig. 12 shows the data stored in the history storage area 44 of the advertisement server 40. The advertisement server 40 can total the results of each advertisement based on the history.

In this way, by storing location information on RFID into the memory of the RFID, it is possible to collect the result information of an advertisement via an advertisement server.

As shown in Fig. 10(d), it is possible to combine the second embodiment with the third embodiment by storing an advertisement ID, counter and location information into the memory of the RFID. In this case, it is possible to check history information collected via a history collection terminal against history information collected via an advertisement server in order to detect any mistake in totaling.

It is possible to analyze the consumer class that is interested in the advertisement, analyze the effects of the advertisement by time, and obtain destination information, by acquiring personal information including sex and telephone number from the personal portable terminal 20 and storing the access date/time, sex and personal information as history information into the memory of the RFID, as shown in Fig. 10(e).

It is possible to analyze the influence of the weather on the effects of the advertisement, by acquiring the temperature and weather information from the sensor and storing the access date/time, weather, and temperature as history information into the memory of the RFID, as shown in Fig. 10(f).

While each embodiment assumes that the portable terminal acquires a pointer to the information obtained from the network from the RFID, other means such as obtaining pointer information by striking a light on a tag. The RFID that uses a radio wave need not aim at a target correctly as in the case of a light so that the operation of a portable terminal is made easy and this approach is more appropriate as an entrance to a network.

It is easy to write or overwrite information in the RFID. It is possible to use write means (reader-writer, remote-control transceiver, terminal installed in a train, etc) to write the same pointer into a bundle of printed ads with RFID affixed or overwrite data in batch processing.

To write the location of an advertisement into the RFID, location information specifying the advertisement posting location to the RFID affixed to an advertisement when the printed advertisements are distributed to posting locations. The advertisement installer uses write means such as a reader-writer to read this information and installs the advertisement at the specified location. IN this way, it is possible to use the recording information in the RFID as an instruction of posting location.

In the advertisement system that is based on the fee contingent on success, in case the advertisement installer is different from the owner of the advertisement posting location (such as a railroad company) it is necessary to store the information on the advertisement installer into the RFID affixed to the advertisement and record the name of the advertisement installer in the history retained by the as server, in order for the advertisement installer to receive reward contingent on success. In case the advertisement is shared by a plurality of advertisement installers, it is necessary to store a plurality of advertisement installers into the RFID. In this way, it is necessary to write various setting information or overwrite such information in the RFID, such processing is made easy by using a reader-writer.

The RFID may be affixed to any type of advertisement or an advertisement located in any location. One example is an advertisement of a real estate on a telephone pole. Affixing an RFID to this advertisement obtains detailed advertisement information such as detailed information on each real estate article and web page information for reserving the observation tour to the article) . In case the user's tool (such as portable terminal) has means to access a network based on the information, the user can obtain the map information from the present location to the destination via the network or make a reservation of the observation tour.

It is possible to implement an advertisement that is connected to a network in a location where an advertisement is temporarily posted, as well as a location where the advertisement is regularly posted.

### Industrial Applicability

As understood from the foregoing description, the information collection system according to the invention provides means for sending a pointer to information obtained from a network in response to an information request made by a portable terminal so that anyone can readily access the network and enjoy network services, in other words, an organic linkage between the cyber world and the real world.

By providing the means for sending the pointer on an advertisement medium such as a printed advertisement and panorama vision, it is possible to enhance the effects of an advertisement and objectively evaluate the value of an advertisement.

Simply affixing an RFID to an advertisement medium obtains such effects, without a need to provide a special facility in the advertisement posting location.

The RFID can be affixed to a variety of advertisements such as advertising poster and panorama vision that are placed in any location, thereby providing advertisements connected to a network. A temporarily posted advertisement may be affixed with an RFID to work as an advertisement that is connected to a network.

An information collection system according to the invention allows collection of information via an existing network so that it is not necessary to implement a system anew or install corresponding facilities in several locations, thus reducing the initial investment.

## Claims

1. Information collection system for acquiring information from a network comprising pointer sending means for sending the pointer to information to be acquired from a network based on a request, a portable terminal having access means to a network, **characterized in that** said portable terminal acquires information from information provision means by using the pointer obtained after making a request of the pointer sending means.

2. Information collection system according to claim 1, **characterized in that** said portable terminal has access means to a network and acquires information from the information provider via a network.

3. Information collection system according to claim 2, **characterized in that** said pointer sending means is affixed to an advertisement medium and that said portable terminal uses said pointer obtained from said pointer sending means to acquire advertisement information from an advertisement server.

4. Information collection system according to claim 3, **characterized in that** said advertisement medium is a printed advertisement medium.

5. Information collection system according to any one of the claims 1 through 3, **characterized in that** said advertisement medium displays a varying advertisement and that said pointer sending means sends a pointer corresponding to the contents of the varying advertisement based on a request.

6. Information collection system according to any one of the claims 1 through 3, **characterized in that** information indicating the access status of said portable terminal to said pointer sending means information indicating the status assumed when said portable terminal accessed said pointer sending means, and information provided by said portable terminal that accessed said pointer sending means is stored as history information.

7. Information collection system according to claim 6, **characterized in that** said history information is saved by said pointer sending means.

8. Information collection system according to claim 6, **characterized in that** said history information is saved in elsewhere than said pointer sending means.

9. Information collection system according to claim 6, **characterized in that** the pointer sending count of said pointer sending means is saved as said history information.

10. Information collection system according to claim 6, **characterized in that** said portable terminal sends personal information when accessing said pointer sending means and that said personal information is saved as said history information.

11. Information collection system according to claim 6, **characterized in that** the time information obtained when said portable terminal has accessed is saved as said history information.

12. Information collection system according to claim 6, **characterized in that** the day of week or day of month information obtained when said portable terminal has accessed is saved as said history information.

13. Information collection system according to claim 6, **characterized in that** the temperature of humidity information obtained when said portable terminal has accessed is saved as said history information.

14. Information collection system according to claim 6, **characterized in that** the weather information obtained when said portable terminal has accessed is saved as said history information.

15. Information collection system according to claim 6, **characterized in that** the congestion information obtained when said portable terminal has accessed is saved as said history information.

16. Information collection system according to claim 9, **characterized in that** the transmission count of the pointer of said pointer sending means affixed to each of a plurality of advertisements that constitute a group, or transmission count per said group obtained by totaling said transmission count is saved as the transmission count of said pointer.

17. Information collection system according to claim 16, **characterized in that** a plurality of advertisement media posted in a train constitute said group per train.

18. Information collection system according to any one of the claims 6 through 17, **characterized in that** said information collection system comprises history information collection means for collecting said saved history information.

19. Information collection system according to claim 18, **characterized in that** said history information collected by said history information collection means is transferred to an advertisement server.

20. Information collection system according to claim 18 or 19, **characterized in that** the advertising results of an advertisement medium are evaluated based on the transmission count of said pointer to the history information collected by said history information collection means.

21. Information collection system according to claim 20, **characterized in that** an advertisement installer requests an advertisement posting rate based on the transmission count of said pointer from an advertising agency or an advertiser.

22. Information collection system according to claim 20, **characterized in that** an advertising agency requests an advertisement planning rate based on the transmission count of said pointer from an advertiser.

23. Information collection system according to claim 20, **characterized in that** an advertisement location provider requests an advertisement location provision rate based on the transmission count of said pointer from an advertisement installer or an advertiser.

24. Information collection system according to claim 18 or 19, **characterized in that** said information collection system comprises encryption means for encrypting said saved history information and that said history information collection means collects the encrypted history information.

25. Information collection system according to claim 24, **characterized in that** said encryption means uses an encryption key given by said history information collection means to encrypt history information and that said history information collection means gives said encryption key to said encryption means when collecting said history information.

26. Information collection system according to any one of the claims 3 through 15, **characterized in that** said pointer sending means sends said pointer and the location information on the advertisement medium to said portable terminal, that said portable terminal sends said pointer and said location information to said advertisement server, and that said advertisement server saves the access count per advertisement medium discriminated with said location information as the history information of said advertisement medium.

27. Information collection system according to claim 26, **characterized in that** the advertising results of an advertisement medium are evaluated based on the access count of said history information saved by said advertisement server.

28. Information collection system according to claim 26, **characterized in that** said pointer sending means sends saved history information together with said pointer and the location information on the advertisement medium to said portable terminal, that said portable terminal sends said history information together with said pointer and said location information to said advertisement server, and that said advertisement server saves said history information together with the access count per advertisement medium.

29. Information collection system according to claim 1, **characterized in that** said portable terminal transfers said pointer obtained from said pointer sending means to a television set, and that said television set uses said pointer to acquire information from an information provider via a network.

30. Information collection system according to any of the claims 1 through 29, **characterized in that** said pointer sending means is a non-contact IC card.

31. Information collection system according to claim 30, **characterized in that** setting information other than said pointer is also recorded on said non-contact IC card and that said setting information is sent together with said pointer.

32. Information collection system according to claim 31, **characterized in that** said setting information is article name information.

33. Information collection system according to claim 31, **characterized in that** said setting information is information on the advertisement posting location.

34. Information collection system according to any of the claims 31 through 33, **characterized in that** portable terminal comprises display means for listing said setting information obtained from said plurality of non-contact IC cards within a predetermined period and a selection means for selecting either information from said listed setting information, in order to acquire information from a network by using a pointer obtained together with the selected setting information.

35. Information collection system according to any of the claims 30 through 33, **characterized in that** said non-contact IC card is affixed to a printed advertisement medium and that a pointer specifying the seller or reservation desk of an article displayed on said advertisement medium is recorded on said non-contact IC card.

36. Information collection system according to claim 30 or 31, **characterized in that** said non-contact IC card is affixed to a magazine advertisement in a train and that a pointer specifying the information provider of the story information carried in said magazine is recorded on said non-contact IC card.

37. Information collection system according to claim 30 or 31, **characterized in that** said non-contact IC card is affixed to a magazine and that a pointer specifying the information provider of the story information carried in said magazine is recorded on said non-contact IC card.

38. Information collection system according to any of the claims 30 through 32, **characterized in that** said non-contact IC card is affixed to a magazine and that a pointer specifying the advertisement server of the advertisement carried in said magazine is recorded on said non-contact IC card.

39. Information collection system according to any of the claims 30 through 32, **characterized in that** said non-contact IC card is affixed to a product and that a pointer specifying the service center for said product is recorded on said non-contact IC card.

40. Information collection system according to claim 39, **characterized in that** data representing the model of the product is also recorded as setting information on said non-contact IC card.

41. Information collection system according to claim 30, **characterized in that** said information collection system comprises non-contact power feed means for supplying a power feed radio wave to said non-contact IC card and that said non-contact IC card is always activated by power feeding from said non-contact power feed means.

42. Information collection system according to claim 30, **characterized in that** said portable terminal supplies a power feed radio wave to said non-contact IC card when accessing said non-contact IC card and that saidnon-contact IC card is activated only when said radio wave is supplied from said portable terminal.

43. An article where a non-contact IC card is affixed that records a pointer specifying the information acquisition destination of the information acquired from a network.

44. A printed advertisement according to claim 43, **characterized in that** a pointer specifying an advertisement server is recorded on said non-contact IC card.

45. A printed advertisement according to claim 43, **characterized in that** a pointer specifying the seller or reservation desk of an advertised article is recorded on said non-contact IC card.

46. A printed advertisement according to claim 43, **characterized in that** a pointer specifying the information provider of story information carried in a magazine of the advertised article is recorded on said non-contact IC card.

47. A magazine according to claim 43, **characterized in that** a pointer specifying the information provider of the carried story information is recorded on said non-contact IC card.

48. A magazine according to claim 43, **characterized in that** a pointer specifying the advertisement server for the carried advertisement is recorded on said non-contact IC card.

49. A product according to claim 43, **characterized in that** a pointer specifying a service center and the model are recorded on said non-contact IC card.

50. A portable terminal according to any one of the claims 1 through 42.
